# EUROPÄISCHE PATENTSCHRIFT

(11) **EP 3 617 575 B1**
(45) Veröffentlichungstag und Bekanntmachung des Hinweises auf die Patenterteilung: **04.08.2021**
(21) Anmeldenummer: 18306157.1
(22) Anmeldetag: 03.09.2018
(51) Int. Cl.: F16L 5/02, H02G 3/22, B60R 16/02

(54) **WANDDURCHFÜHRUNG FÜR LÄNGLICHE BAUTEILE**
WALL FEED-THROUGH FOR ELONGATED COMPONENTS
TRAVERSÉE DE PAROI POUR COMPOSANTS OBLONGS

(43) Veröffentlichungstag der Anmeldung: 04.03.2020
(73) Patentinhaber: Nexans, 92400 Courbevoie (FR)
(72) Erfinder: ZRENNER, Andreas, 92681 ERBENDORF (DE); WALTER, Erhard, 92697 Georgenberg (DE); WALL, Markus, 92685 Floss (DE)
(74) Vertreter: Ipsilon

(56) Entgegenhaltungen:
- US-A- 5 545 854
- US-A1- 2014 054 064
- US-B1- 9 944 239

## Beschreibung

### Gebiet

Die Erfindung betrifft eine Wanddurchführung.

### Hintergrund

Bei der Installation von elektrischen Anlagen ist es oft erforderlich, bereits mit Steckverbindern oder ähnlichen Kontaktelementen versehene elektrische Leitungen durch Öffnungen in Gehäusewänden durchzuführen. Damit die Steckverbinder für das Durchführen nicht entfernt werden müssen, weisen diese Öffnungen dabei oft einen Durchmesser auf, der größer ist als der Leitungsdurchmesser. Hierbei stellt sich das Problem, die Gehäuseöffnung nach dem Durchführen der Leitung dicht zu verschließen. Ähnliches gilt, wenn anstelle von elektrischen Leitungen Seilzüge oder Gestänge mit daran befestigten Anschlagteilen durch Gehäusewände hindurchgeführt werden sollen.

Die Öffnungen in Gehäusewänden können mittels Dichtpfropfen aus Kautschuk, Polymeren oder anderen elastischen Materialien abgedichtet werden. Bei größeren Öffnungen sind dafür entsprechend große Dichtpfropfen erforderlich, welche zur Erlangung einer ausreichenden mechanischen Stabilität entsprechend massiv ausgeführt werden müssen, insbesondere wenn ein durch die Wanddurchführung hindurch geführtes Kabel, Seil oder Gestänge bei normaler Benutzung entlang einer Längsrichtung verschoben wird.

Im Falle einer einteiligen Wanddurchführung können Leitungen, Seile oder Gestänge mit verdickten Enden, bspw. Anschlagteilen oder angespritzten Elementen, nur schlecht durch die Durchgangsöffnung geführt werden. Aus diesem Grund können zwei- oder mehrteilige Ausführungen zum Einsatz kommen. Bei den zwei- oder mehrteiligen Wanddurchführungen kann die Abdichtung zwischen den Teilen eine Herausforderung darstellen, aber auch die Maß- und Formhaltigkeit der zusammengesetzten Teile. Letzteres kann insbesondere dann problematisch sein, wenn die zusammengesetzten Teile nur durch Einklemmen in der Öffnung der Wand zusammengehalten werden. Eine Verbindung mittels Verkleben kann hier Abhilfe schaffen, erfordert jedoch einen zusätzlichen Arbeitsschritt und ggf. Trocknungszeit. Außerdem können verklebte Teile nur sehr schlecht wieder getrennt werden, sollte dies etwa für Wartungszwecke oder beim Austausch der Teile erforderlich werden.

In der US 5 545 854 A ist eine mehrteilige Kabeldurchführung offenbart, bei der jedes von zwei flexiblen Dichtungsteilen jeweils zwischen zwei Hartkomponenten aufgenommen wird. Die so aus jeweils drei zusammengefügten Teilen entstehenden Hälften der Kabeldurchführung werden dann beiderseits einer Leitung positioniert, so dass diese von der Kabeldurchführung aufgenommen werden kann, und mittels Rastverbindungen zusammengefügt. Dabei wird die Leitung von den flexiblen Dichtungsteilen dichtend eingeklemmt, die sich axial über die gesamte Länge der Kabeldurchführung erstrecken.

Die US 9 944 239 B1 zeigt eine vierteilige Dichtungsanordnung, bei der in jeder von zwei Hälften einer Hartkomponente jeweils eine von zwei Hälften einer Dichtungskomponente aufgenommen wird. Beim Zusammenbau der Hälften wird die Leitung von den flexiblen Dichtungsteilen dichtend eingeklemmt, die sich axial über die gesamte Länge der Kabeldurchführung erstrecken.

Die US 2014/054064 A1 zeigt eine Kabeldurchführung mit einer über einem Kabel zusammenklappbaren Hartkomponente, über welcher eine zusammenklappbare, glockenartige äußere Dichtungskomponente anbringbar ist, die zugleich die einzige Dichtungskomponente der Kabeldurchführung darstellt.

Durch eine ein- oder mehrteilige Wanddurchführung aus elastischen Materialien geführte Leitungen oder Seile können nicht unmittelbar vor und/oder nach der Wanddurchführung in einem engen Radius verlegt werden, weil sonst u.a. die Geometrie der Wanddurchführung und damit der dichtende Anschluss an die Wand beeinträchtigt werden. Wenn eine Leitung oder ein Seil in Längsrichtung beweglich in einer solchen Wanddurchführung geführt ist führt eine Verlegung in einem engen Radius oder eine nicht der Seilachse folgende Zugbelastung dazu, dass die Kraft zum Bewegen der Leitung oder des Seils stark schwankt.

### Zusammenfassung der Erfindung

Es ist daher wünschenswert, eine Wanddurchführung zu erhalten, welche Nachteile der bekannten Wanddurchführungen verringert oder vermeidet, und eine verbesserte Handhabung bietet.

Zur Lösung dieser Aufgabe schlägt die Erfindung eine Wanddurchführung mit einer mehrteiligen, vorzugsweise zweiteiligen Hartkomponente und einem Dichtungsteil vor, bei der jedes Teil der Hartkomponente in einer aus einer parallel zu der Wand liegenden Ebene herausweisenden Richtung eine durchgehende Aussparung aufweist. Die Aussparungen können senkrecht zu der parallel zur Wand liegenden Ebene verlaufen, aber auch in beliebigen Winkeln. Im zusammengesetzten Zustand bilden die Aussparungen der Teile der Hartkomponente eine Durchführungsöffnung. Ausführungen mit mehreren Aussparungen, die im zusammengesetzten Zustand mehrere entsprechende Durchführungen bilden, sind ebenfalls möglich.

Jedes Teil der Hartkomponente weist zumindest an der Aussparung eine erste Aufnahme für eine Weichkomponente auf. Die in der ersten Aufnahme aufgenommenen Weichkomponenten liegen im montierten Zustand der Teile der Hartkomponente dichtend aneinander und umschließen die Durchführungsöffnung radial. Alternativ kann eine die Durchführungsöffnung ringförmig umschließende, elastische Weichkomponente in den ersten Aufnahmen der Teile der Hartkomponenten aufgenommen sein, bspw. ein elastischer Dichtring, der ein durch die Durchführungsöffnung hindurchgeführtes Kabel, Seil oder Gestänge umschließt. Die Abmessungen von Weichkomponente und Aussparung bzw. Durchführungsöffnung einerseits und Seil, Kabel oder Gestänge andererseits sind derart aufeinander abgestimmt, dass die Durchführungsöffnung im Montageendzustand dicht abgeschlossen ist.

Die Weichkomponenten können in die ersten Aufnahmen eingelegt oder an die ersten Aufnahmen angespritzt sein. Die erste Aufnahme kann dabei so gestaltet sein, dass die Weichkomponente formschlüssig mit der Hartkomponente verbunden ist. Je nach Ausführung kann eine zusätzliche stoffschlüssige Verbindung zwischen Hart- und Weichkomponente vorgesehen sein, bspw. durch Verkleben oder lokales Aufschmelzen im Kontaktbereich von Weichkomponente und erster Aufnahme.

Jedes Teil der Hartkomponente weist außerdem eine oder mehrere Rastvorrichtungen auf, welche nach dem Einbringen der Wanddurchführung in ein Durchgangsloch der Wand mit der Wand verrasten. Dabei kann es sich um die Wand eines elektrischen Gerätes oder einer elektrischen Anlage usw. oder aber auch um eine Trennwand eines Kraftfahrzeugs handeln. Die konkrete Ausgestaltung der Wand, insbesondere die Beschaffenheit der Wand oder die hierfür verwendeten Materialien, ist für die Ausführbarkeit der Erfindung unerheblich. Die Rastvorrichtungen können Rast- oder Schnapphaken umfassen, welche die Wanddurchführung ohne Werkzeug durch Einrasten am Umfang oder Rand des Durchgangslochs in der Wand fixieren.

Jedes Teil der Hartkomponente weist zudem an einer Außenseite mindestens eine zweite Aufnahme für das Dichtungsteil auf. Die zweiten Aufnahmen sind im eingebauten Zustand von der Wand beabstandet, d.h., sie liegen nicht unmittelbar an der Wand an. Das Dichtungsteil weist einen Dichtbereich auf, welcher die zusammengefügten und mit der Wand verrasteten Teile der Hartkomponente zumindest zwischen den zweiten Aufnahmen und zu der Wand abdichtet. Dabei kann das Dichtungsteil auf die Hartkomponente eine elastische Kraft in einer im Wesentlichen senkrecht zu der Wand wirkenden Richtung ausüben, welche die durch das Durchgangsloch geführten Rastvorrichtungen an der Wand halten. Das Dichtungsteil kann einteilig ausgeführt sein und die miteinander verbundenen Teile der Hartkomponente radial umschließen.

Bei einer oder mehreren Ausführungen der Wanddurchführung weisen die Teile der Hartkomponente an oder auf einer Fläche, die im montierten Zustand zumindest bereichsweise an einer entsprechenden Fläche eines benachbarten Teils der Hartkomponente anliegt, Dichtmittel auf. Diese Dichtmittel können Teil der Weichkomponente sein, oder zumindest dichtend an dieser anliegen. Dichtend bedeutet im Kontext dieser Beschreibung, dass Fluide an der Ausbreitung durch oder über die dichtenden Elemente hinaus ge- oder zumindest behindert werden. Die Dichtmittel erstrecken sich, an die Weichkomponente der Aussparung dichtend anschließend, in radialer Richtung von der innen liegenden Durchgangsöffnung aus unterbrechungsfrei bis zu einer äußeren Oberfläche der Hartkomponente. Die Dichtmittel bilden eine Sperre für Fluide, die zwischen die aneinander anliegenden Flächen der Teile der Hartkomponente gelangen. Bei eng aneinander liegenden Flächen könnte sonst ein Fluidtransport durch die Wanddurchführung aufgrund des Kapillareffekts erfolgen. Als Fluid kommt beispielsweise Wasser in Frage, insbesondere Regen- und/oder Spritzwasser.

Bei einer oder mehreren Ausführungen der Wanddurchführung weist die Durchführungsöffnung im Bereich der Weichkomponenten einen kleineren Durchmesser auf als im Bereich der Hartkomponenten. Dabei kann die Verringerung des Durchmessers durch die Weichkomponente hervorgerufen sein. Alternativ oder zusätzlich dazu können die Aussparungen in den Teilen der Hartkomponente selbst einen geänderten Querschnitt aufweisen. Die Weichkomponente kann im Bereich der Aussparung bzw. der späteren Durchführungsöffnung unter mechanischer Spannung an einem durch die Durchführungsöffnung hindurchgeführten Seil, Kabel, Gestänge oder dergleichen dichtend anliegen. Um eine bessere Beweglichkeit des durch die Durchführungsöffnung geführten Bauteils zu ermöglichen können an dieser Stelle ein oder mehrere Lamellen oder Rippen vorgesehen sein, welche an dem Bauteil anliegen. Diese Rippen oder Lamellen können sich in Richtung einer Bewegung des Bauteils verformen und trotzdem daran anliegen, so dass die Dichtigkeit der Durchführung auch bei einer Verschiebung des durch die Wanddurchführung geführten Bauteils gewährleistet ist.

Bei einer oder mehreren Ausführungen der Wanddurchführung weisen die Teile der Hartkomponente eines oder mehrere Verbindungselemente auf, mittels derer die Teile der Hartkomponente verbindbar sind. Die Verbindung kann dabei lösbar oder unlösbar sein. Die Verbindungselemente können beispielsweise Rastnasen umfassen, welche in entsprechende Ösen oder Hinterschnitte des jeweils anderen Teils der Hartkomponente eingreifen. Denkbar sind auch Spreizelemente, welche in entsprechende Löcher oder Bohrungen des jeweils anderen Teils der Hartkomponente eingreifen, dort aufspreizen und ein Lösen der Teile voneinander verhindern. Anstelle der Spreizelemente können auch in enger Passung in entsprechende Löcher oder Bohrungen des jeweils anderen Teils der Hartkomponente eingreifende zylindrische Stifte vorgesehen sein. In diesem Fall verhindert die Reibung zwischen Stift und Bohrung ein Lösen der Teile, was zusätzlich durch das Dichtungsteil und/oder die Durchführungsöffnung in der Wand be- oder verhindert werden kann. Zusätzlich können die Teile verklebt oder verschweißt werden.

Bei einer oder mehreren Ausführungen der Wanddurchführung umschließt das Dichtungsteil die Teile der Hartkomponente zumindest zwischen den zweiten Aufnahmen und der Wand ringförmig. Das Dichtungsteil kann dazu radial elastisch ausgeführt sein, so dass es mit einer inneren Ringseite unter mechanischer Spannung an einer Außenseite der Hartkomponente anliegt.

Bei einer oder mehreren Ausführungen der Wanddurchführung ist das Dichtungsteil in einer Richtung, welche aus einer zu der Wand parallelen Ebene herausweist, elastisch oder plastisch verformbar, so dass es im eingebauten Zustand der Wanddurchführung zwischen den zweiten Aufnahmen und der Wand komprimiert oder so verformt wird, dass das Dichtungsteil umlaufend dichtend an der Wand anliegt. Im Falle eines mehr oder weniger ringförmigen Dichtungsteils heißt das, dass das Dichtungsteil in axialer Richtung elastisch oder plastisch verformbar ist. Hierdurch können auch unterschiedliche Stärken der Wand ausgeglichen werden, d.h. dieselbe Wanddurchführung kann bei unterschiedlichen Wandstärken verwendet werden. Außerdem werden Unregelmäßigkeiten zwischen der Wand und der Wanddurchführung gegeneinander ausgeglichen.

Bei einer oder mehreren Ausführungen der Wanddurchführung ist das Dichtungsteil mit den zweiten Aufnahmen stoff- und/oder formschlüssig verbindbar, so dass die Hartkomponenten und das Dichtungsteil zueinander fixierbar sind. Eine formschlüssige Verbindung kann bspw. mittels einer innenliegenden Ringnut in dem Dichtungsteil bewirkt werden, in welche die Aufnahmen eingreifen. Anstelle der Ringnut kann das Dichtungsteil auch entsprechende, mit den Aufnahmen korrespondierende, nach innen vorspringende Bereiche oder Aussparungen aufweisen.

Bei einer oder mehreren Ausführungen der Wanddurchführung weist das Dichtungsteil auf einer an der Wand anliegenden Seite eine radial umlaufende, in Richtung Wand vorspringende elastische Dichtlippe auf, welche nach der Verrastung der Wanddurchführung in der Durchgangsöffnung der Wand unter mechanischer Spannung steht und umlaufend dichtend an der Wand anliegt.

Bei einer oder mehreren Ausführungen der Wanddurchführung umschließt das Dichtungsteil die zusammengesetzte Hartkomponente glockenförmig. Dabei bleibt die Durchgangsöffnung in axialer Richtung beidseitig offen. Der untere Teil des glockenförmigen Dichtungsteils kann dabei so gestaltet sein, dass die untere Öffnung der unter mechanischer Spannung an der Wand umlaufend dichtend anliegt. Das glockenförmige Dichtungsteil kann dazu mit den zweiten Aufnahmen so verbunden sein, dass eine axiale Verschiebung von Dichtungsteil und Hartkomponente nicht möglich ist. Je nach Elastizität des Dichtungsteils kann die obere Öffnung an dem Seil, Kabel oder Gestänge elastisch anliegen und so eine weitere Dichtung bilden.

Bei einer oder mehreren Ausführungen weist das Dichtungsteil eine Form auf, die der Oberfläche eines Rotationskörpers ähnelt. Beispiele hierfür sind die äußere Oberfläche eines Kegelstumpfs, die Oberfläche eines Abschnitts eines Rotationsellipsoids zwischen zwei Breitengraden, eines Abschnitts eines Rotationsparaboloids oder eines Rotationshyperboloids.

Bei einer oder mehreren Ausführungen der Wanddurchführung sind die Teile der Hartkomponente Gleichteile. In einem Fall müssen die Gleichteile gegeneinander um 180 Grad gedreht werden, um miteinander verbunden werden zu können. In einem anderen Fall sind die Gleichteile Segmente, die ohne Drehung miteinander verbunden werden können.

Die Weichkomponente, die Dichtmittel und/oder das Dichtungsteil bestehen vorzugsweise aus flexibel verformbaren Materialien bestehen, z.B. Silikon, Gummi, Polymere, Kautschuk, und dergleichen. Die Materialien von Weichkomponente, Dichtmittel, Dichtungsteil und/oder Hartkomponente können je nach Anforderung elektrisch nichtleitend sein oder, falls eine Abschirmung gegenüber elektromagnetischer Strahlung erforderlich ist oder die Erzeugung elektrischer Ladung durch Reibung vermieden werden soll, aus elektrisch leitfähigem Material. Hierzu können Kunststoffen elektrisch leitende Partikel in geeigneter Konzentration beigemischt sein.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Darstellung von Komponenten einer exemplarischen erfindungsgemäßen Wanddurchführung mit zweiteiliger Hartkomponente,
- Fig. 2: zwei Ansichten der zusammengefügten Komponenten der Wanddurchführung aus Figur 1 aus im Wesentlichen entgegengesetzten Richtungen,
- Fig. 3: eine Detailansicht eines Teils der Hartkomponente aus Figur 1 mit Weichkomponente,
- Fig. 4: eine Schnittansicht der im Durchgangsloch einer Wand montierten Wanddurchführung aus Figur 1,
- Fig. 5: eine Schnittansicht einer im Durchgangsloch einer Wand montierten Variante der erfindungsgemäßen Wanddurchführung,
- Fig. 6: eine erste Ansicht einer Anwendung der erfindungsgemäßen Wanddurchführung in einem Elektrofahrzeug,
- Fig. 7: eine zweite Ansicht einer Anwendung der erfindungsgemäßen Wanddurchführung in einem Elektrofahrzeug, und
- Fig. 8: eine exemplarische Darstellung der Verfahrensschritte zur Montage einer erfindungsgemäßen Wanddurchführung.

Gleiche oder ähnliche Elemente sind in den Figuren mit gleichen oder ähnlichen Bezugszeichen versehen.

### Ausführungsbeispiele

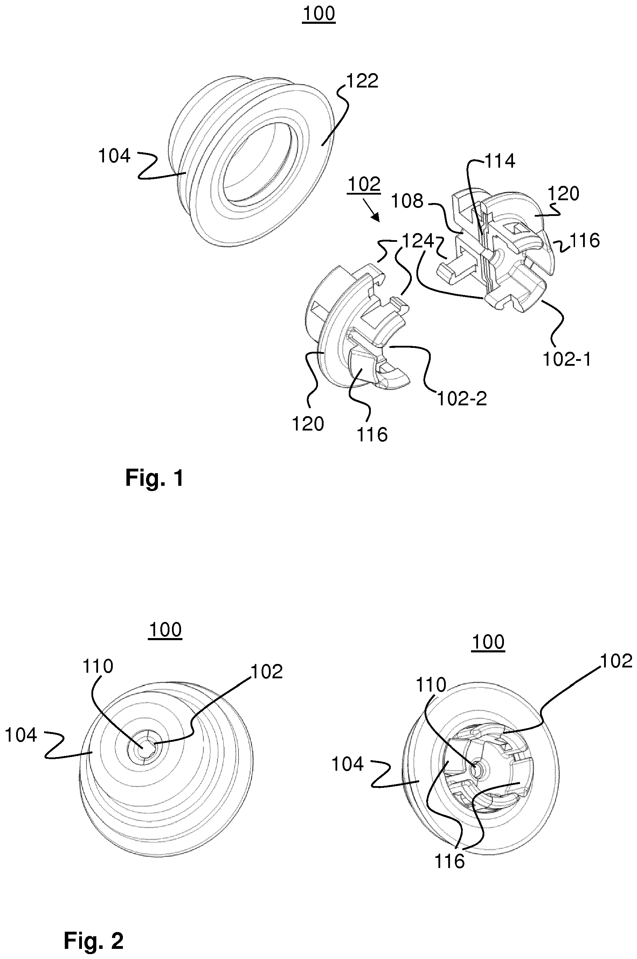

Figur 1 zeigt eine schematische Darstellung von Komponenten einer exemplarischen erfindungsgemäßen Wanddurchführung 100 mit zweiteiliger Hartkomponente 102 und einem Dichtungsteil 104. Die beiden Teile 102-1 und 102-2 der Hartkomponente 102 sind bei diesem Ausführungsbeispiel Gleichteile, d.h. es sind zwei identische Teile, welche gegeneinander gedreht zu der Hartkomponente 102 zusammengefügt werden können. Jedes Teil der Hartkomponente 102 weist Verbindungselemente 124 auf, bei der in der Figur exemplarisch gezeigten Ausführung sind die Verbindungselemente 124 Rasthaken, die in entsprechende Aussparungen bzw. Öffnungen eingreifen und dort einrasten. In dem Bereich, in dem die beiden Teile der Hartkomponente 102 aneinander anliegen ist bei jedem der Teile 102-1 und 102-2 eine Aussparung 108 vorgesehen, welche sich über die gesamte Länge der Hartkomponente erstreckt. Wenn beide Teile 102-1 und 102-2 zu der Hartkomponente zusammengefügt sind bilden die Aussparungen 108 eine Durchführungsöffnung, durch die ein Kabel, Seil oder Gestänge hindurchführbar ist. Quer zu der Aussparung 108 ist jeweils eine Weichkomponente 114 angeordnet, welche sich fast über die gesamte Breite der Teile der Hartkomponente erstreckt. Dabei folgt die Weichkomponente 114 der Kontur der Aussparung 108, so dass im zusammengefügten Zustand der Hartkomponente 102 eine Dichtung in der Durchführungsöffnung und zugleich eine Dichtung zwischen den beiden Teilen 102-1 und 102-2 der Hartkomponente 102 bereitgestellt ist. Die Weichkomponente 114 kann dabei in einer in der Figur nicht erkennbaren ersten Aufnahme angeordnet sein, bspw. einer Rille oder Nut. Eine zweite Aufnahme 120 ist an jedem Teil 102-1 und 102-2 der Hartkomponente 102 vorgesehen. In der Figur ist die zweite Aufnahme 120 ein radial umlaufender Ring, der in eine entsprechende Nut des Dichtungsteils 104 eingreift und die Hartkomponente 102 mit dem Dichtungsteil 104 formschlüssig verbindet. Das Dichtungsteil weist an einer Seite einen Dichtbereich 122 auf, welcher im montierten Zustand der Wanddurchführung 100 an der in der Figur nicht dargestellten Wand dichtend anliegt. Die Teile 102-1 und 102-2 der Hartkomponente 102 weisen außerdem jeweils eine Rastvorrichtung 116 auf, mittels welcher die Wanddurchführung 100 in einem Durchgangsloch der Wand verrastet wird.

Figur 2 zeigt zwei Ansichten der zusammengefügten Komponenten der Wanddurchführung 100 aus Figur 1 aus im Wesentlichen entgegengesetzten Richtungen. Auf der linken Seite der Figur ist eine perspektivische Ansicht des Dichtungsteils 104 von einer Außenseite gesehen gezeigt, in dem die Hartkomponente 102 aufgenommen ist. Außenseite bezeichnet hierbei die Seite, auf der unerwünschte oder undefinierte Umweltzustände herrschen können, die von einer Innenseite ferngehalten sollen. In diesem Teil der Figur ist von der Hartkomponente 102 nur ein kleiner Teil erkennbar. Außerdem ist die Öffnung des Durchführungsöffnung 110 erkennbar.

Auf der rechten Seite der Figur ist eine perspektivische Ansicht des Dichtungsteils 104 von der Innenseite gesehen gezeigt, in welchem die Hartkomponente 102 aufgenommen ist. Die Rastvorrichtung 116 der Hartkomponente 102 ist deutlich erkennbar, mittels derer die Wanddurchführung 100 in dem in der Figur nicht dargestellten Durchgangsloch der Wand befestigbar ist. Ebenfalls deutlich sind die beiden Teile der Hartkomponente 102 erkennbar, bzw. die Trennlinie, an der die beiden Teile aneinander anliegen, sowie die Durchführungsöffnung 110.

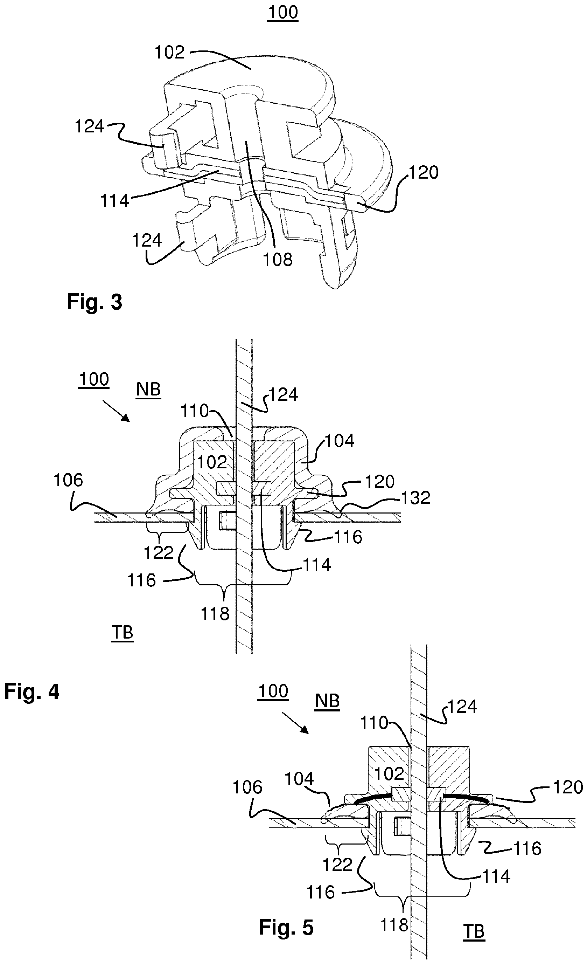

Figur 3 zeigt eine perspektivische Detailansicht eines Teils der Hartkomponente 102 der Wanddurchführung 100 aus Figur 1 mit aufgenommener Weichkomponente 114. Die Ansicht zeigt die Fläche, die im zusammengefügten Zustand der Wanddurchführung 100 an dem anderen Teil der Hartkomponente 102 anliegt. An der linken Seite des Teils der Hartkomponente 102 sind die Rasthaken der Verbindungselemente 124 erkennbar. An der rechten Seite die entsprechenden Stellen, an denen die Rasthaken des anderen Teils der Hartkomponente 102 im zusammengefügten Zustand einrasten. Die Aussparung 108 verläuft zentral durch die Hartkomponente 102 und bildet eine Hälfte der späteren Durchführungsöffnung. Die Weichkomponente 114 erstreckt sich in Höhe der zweiten Aufnahme 120 quer zur Aussparung 108 und bildet eine Dichtungsebene quer durch die Wanddurchführung. Die Weichkomponente 114 verengt im Bereich der Aussparung 108 die Durchführungsöffnung, so dass ein in den zusammengefügten Teilen der Wanddurchführung aufgenommenes Seil, Kabel oder Gestänge frei beweglich in der Durchführungsöffnung führbar ist, aber die gewünschte Dichtwirkung trotzdem erzielt wird (nicht in der Figur dargestellt). Die Weichkomponente 114 liegt dazu im Bereich der Durchführungsöffnung unter mechanischer Spannung elastisch an dem Seil, Kabel oder Gestänge an.

Figur 4 zeigt eine Schnittansicht der im Durchgangsloch 118 einer Wand 106 montierten Wanddurchführung 100 aus Figur 1. Wand 106 kann bspw. eine Spritzwand oder ein Trennblech in einem Kraftfahrzeug sein, die einen Nassbereich NB von einem Trockenbereich TB trennt. Die Hartkomponente 102 ist mit den Rastvorrichtungen 116 in dem Durchgangsloch 118 der der Wand 106 verrastet. Das glockenförmige Dichtungsteil 104 übergreift die Hartkomponente 102 und ist in der zweiten Aufnahme 120 formschlüssig aufgenommen, so dass Dichtungsteil 104 und Hartkomponente 102 gegen eine Verschiebung in Richtung der Durchführungsöffnung 110 gesichert sind. Dichtungsteil 104 ist zwischen Wand 106 und zweiter Aufnahme 120 eingeklemmt. Dabei kann dieser Bereich des Dichtungsteils komprimiert und/oder verformt sein, so dass das Dichtungsteil 104 mit einem Dichtbereich 122 radial umlaufend an der Wand 106 anliegt. In der Figur ist dies dadurch dargestellt, dass der äußere Rand des Dichtungsteils scheinbar in die Wand eindringt; in der Realität würde der äußere Rand unter mechanischer Spannung an der Wand anliegen. Die Trennlinie zwischen den beiden Teilen der Hartkomponente verläuft senkrecht aus der Zeichnungsebene herausweisend, daher sind die Bereiche der Weichkomponente 114, die sich zu den Rändern der zweiten Aufnahme 120 erstrecken nicht dargestellt.

Figur 5 zeigt eine Schnittansicht einer im Durchgangsloch 118 einer Wand 106 montierten Variante der erfindungsgemäßen Wanddurchführung 100. Bei dieser Variante umschließt im Unterschied zu der in Figur 4 gezeigten Ausführung das Dichtungsteil 104 die Hartkomponente 102 nicht glockenförmig, sondern ist als Ring ausgeführt. Das ringförmige Dichtungsteil 104 ist genau wie in Figur 4 zwischen Wand 106 und zweiter Aufnahme 120 eingeklemmt, so dass es unter mechanischer Spannung steht. Die Dichtheit zwischen den beiden Teilen der Hartkomponente 102 und dem Dichtungsteil 104 wird durch eine entsprechende Gestaltung der Weichkomponente 114 erreicht, welche bis an das Dichtungsteil 104 herangeführt ist. In der Figur ist dies exemplarisch durch die Linie dargestellt, die sich von der Weichkomponente 114 aus seitlich in Richtung Dichtungsteil 104 erstreckt. Die übrigen Elemente entsprechen denen aus Figur 4 und sind mit denselben Bezugszeichen referenziert. Sie werden daher nicht erneut erläutert.

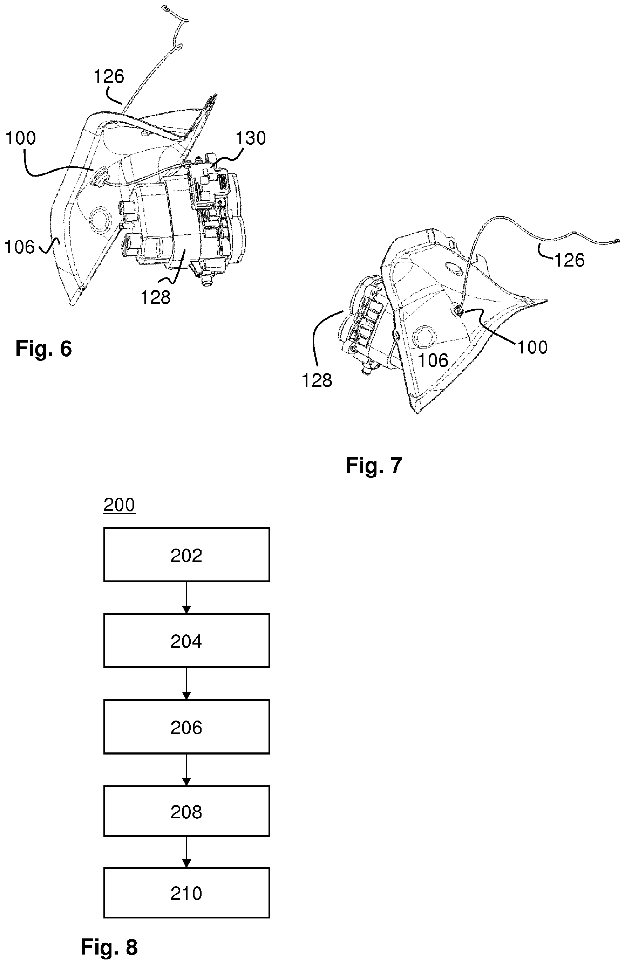

Figur 6 zeigt eine erste Ansicht einer Anwendung der erfindungsgemäßen Wanddurchführung 100 in einem Elektrofahrzeug. Bei vielen Elektrofahrzeugen ist eine Ladedose 128 vorgesehen, mittels derer eine elektrische Verbindung zwischen einer Stromquelle und der Antriebsbatterie des Fahrzeugs hergestellt werden kann (nicht in der Figur gezeigt). Die Ladedose 128 ist üblicherweise von außen zugänglich am Fahrzeug angeordnet, befindet sich somit außerhalb eines von äußeren Umwelteinflüssen abgeschirmten Innenraums des Fahrzeugs. Ein mit der Ladedose 128 verbundener Stecker einer Stromquelle (nicht in der Figur gezeigt) muss auch vom Innenraum aus von der Ladedose 128 getrennt werden können. Dazu ist ein Seilzug 126 vorgesehen, der mit einer in der Figur nicht dargestellten Betätigungsvorrichtung im Innenraum des Fahrzeugs verbunden ist, und der mit einer mechanischen Trenneinrichtung an der Ladedose verbunden ist. Bei Betätigung des Seilzuges werden Stecker und Ladedose 128 voneinander getrennt. Der Seilzug 126 muss durch die Wand 106, die den Innenraum (Trockenbereich) vom Äußeren des Fahrzeugs (Nassbereich) trennt, hindurchgeführt werden. In der Figur befindet der Nassbereich auf der Seite der Wand 106, auf der sich die Ladedose 128 befindet. Dazu ist der Seilzug 126 durch eine erfindungsgemäße Wanddurchführung 100 geführt. Wie eingangs erwähnt ist es wünschenswert, Durchgangslöcher in Trennwänden mit möglichst kleinen Durchmessern auszuführen. Die erfindungsgemäße zweiteilige Wanddurchführung ermöglicht dies dadurch, dass die Durchführungsöffnung in der Wanddurchführung nur in etwa den Durchmesser des Seilzuges aufweisen muss, weil größere Anschlagteile des Seils nicht durch die Durchführungsöffnung hindurchgeführt werden müssen.

Figur 7 zeigt eine zweite Ansicht einer Anwendung der erfindungsgemäßen Wanddurchführung 100 in einem Elektrofahrzeug. In der Figur ist eine Ansicht vom Innenraum des Fahrzeugs aus gezeigt. Seilzug 126 ist vom Innenraum (Trockenbereich) aus durch die in der Wand 106 montierte Wanddurchführung 100 geführt, und von dort mit der nicht in der Figur gezeigten Trenneinrichtung 130 der Ladedose 128 verbunden. Die Führung des Seilzugs 126 ist in den Figuren 6 und 7 rein exemplarisch und kann je nach Fahrzeug anders verlaufen.

Figur 8 zeigt eine exemplarische Darstellung der Verfahrensschritte zur Montage 200 einer erfindungsgemäßen Wanddurchführung 100. In einem ersten Schritt 202 wird das Kabel, Seil oder das Gestänge in den Aussparungen 108 der Teile der Hartkomponente 102 der Wanddurchführung 100 platziert. Im nächsten Schritt 204 werden die Teile der Hartkomponente 102 zusammengefügt und miteinander verbunden. Die Verbindung kann bspw. durch Verrasten der Verbindungselemente 124 erfolgen. Im nächsten Schritt 206 wird das Dichtungsteil mit der zweiten Aufnahme 120 verbunden bzw. an diese herangebracht. Die Wanddurchführung 100 wird nun in Schritt 208 in das Durchgangsloch 118 der Wand 106 eingeführt. Dies kann durch Verschieben der auf dem Kabel, Seil oder Gestänge 126 angeordneten Wanddurchführung 100 erfolgen, bspw. wenn das Kabel, Seil oder Gestänge 126 bereits durch das Durchgangsloch 118 der Wand 106 hindurchgeführt ist. Alternativ kann das Kabel, Seil oder Gestänge 126 vom Nassbereich aus durch das Durchgangsloch 118 in den Trockenbereich geführt werden, dabei wird auch die Wanddurchführung 100 in das Durchgangsloch 118 eingeführt. Schließlich wird die Wanddurchführung 100 im Durchgangsloch der Wand 106 verrastet, wobei das Dichtungsteil 104 zwischen der Hartkomponente 102 und der Wand 106 verformt wird und eine umlaufende Dichtung sichergestellt ist. Das Kabel, Seil oder Gestänge 126 kann nun noch in eine endgültige Position geschoben oder gezogen und dort angeschlagen oder befestigt werden.

### Bezugszeichenliste

- 100: Wanddurchführung
- 102: Hartkomponente
- 104: Dichtungsteil
- 106: Wand, Trennwand
- 108: Aussparung
- 110: Durchführungsöffnung
- 112: erste Aufnahme
- 114: Weichkomponente
- 116: Rastvorrichtung
- 118: Durchgangsloch
- 120: zweite Aufnahme
- 122: Dichtbereich
- 124: Verbindungselement
- 126: Seilzug, Kabel, Gestänge
- 128: Ladedose
- 130: Trenneinrichtung
- 132: Dichtlippe

- NB: Nassbereich
- TB: Trockenbereich

## Patentansprüche

1. Wanddurchführung (100), eingerichtet zur verschiebbaren Führung einer Leitung, eines Seils oder eines Gestänges, mit einer mehrteiligen Hartkomponente (102) und einem einteiligen, radial umlaufend dichtenden Dichtungsteil (104), wobei jedes Teil der Hartkomponente (102) eine durchgehende Aussparung (108) aufweist, welche im in eine Wand (106) eingebauten Zustand in einer aus einer parallel zu der Wand (106) liegenden Ebene herausweisenden Richtung verläuft, wobei die Aussparungen (108) der Teile der Hartkomponente (102) im zusammengesetzten Zustand eine Durchführungsöffnung (110) bilden, wobei jedes Teil der Hartkomponente (102) in der Aussparung (108) eine erste Aufnahme (112) aufweist, in der eine von dem Dichtungsteil (104) separate Weichkomponente (114) angeordnet ist, wobei die jeweiligen Weichkomponenten (114) im montierten Zustand der Teile der Hartkomponente (102) dichtend aneinander liegen und die Durchführungsöffnung (110) radial umschließen, wobei die Teile der Hartkomponente (102) eine oder mehrere Rastvorrichtungen (116) aufweisen, welche nach dem Einbringen der Wanddurchführung (100) in ein Durchgangsloch (118) der Wand (106) mit der Wand (106) verrasten, wobei jedes Teil der Hartkomponente (102) an einer Außenseite mindestens eine zweite Aufnahme (120) für das Dichtungsteil (104) aufweist, und wobei das Dichtungsteil (104) einen Dichtbereich (122) aufweist, welcher die zusammengefügten und mit der Wand verrasteten Teile der Hartkomponente (102) zumindest zwischen den zweiten Aufnahmen (120) und der Wand (106) abdichtet.

2. Wanddurchführung (100) nach Anspruch 1, wobei die Teile der Hartkomponente (102) an oder auf einer ersten Fläche, die im montierten Zustand zumindest bereichsweise an einer entsprechenden zweiten Fläche eines benachbarten Teils der Hartkomponente (102) anliegt, Dichtmittel aufweisen, wobei die Dichtmittel sich an die Weichkomponenten (114) dichtend anschließend in radialer Richtung von der innen liegenden Durchführungsöffnung aus unterbrechungsfrei bis zu einer äußeren Oberfläche der Hartkomponente erstrecken.

3. Wanddurchführung (100) nach Anspruch 1 oder 2, wobei die Durchführungsöffnung (110) im Bereich der Weichkomponenten (114) einen kleineren Durchmesser aufweist als im Bereich der Hartkomponente (102).

4. Wanddurchführung (100) nach einem der Ansprüche 1 bis 3, wobei die Teile der Hartkomponente (102) eines oder mehrere Verbindungselemente (124) aufweisen, mittels derer die Teile der Hartkomponente (102) verbindbar sind.

5. Wanddurchführung (100) nach einem der Ansprüche 1 bis 4, wobei das Dichtungsteil (104) die Teile der Hartkomponente (102) zumindest zwischen den zweiten Aufnahmen (120) und der Wand (106) ringförmig umschließt.

6. Wanddurchführung (100) nach einem der Ansprüche 1 bis 5, wobei das Dichtungsteil (104) im in eine Wand eingebauten Zustand zumindest in einer Richtung, welche aus der zu der Wand (106) parallelen Ebene herausweist, elastisch verformbar ist.

7. Wanddurchführung (100) nach einem der Ansprüche 1 bis 6, wobei das Dichtungsteil (104) mit den zweiten Aufnahmen (120) stoff- und/oder formschlüssig verbindbar ist, so dass die Hartkomponente (102) und das Dichtungsteil (104) zueinander fixierbar sind.

8. Wanddurchführung (100) nach einem der Ansprüche 1 bis 7, wobei das Dichtungsteil (104) im in eine Wand eingebauten Zustand auf einer an der Wand (106) anliegenden Seite eine radial umlaufende, in Richtung Wand (106) vorspringende elastische Dichtlippe (132) aufweist, welche nach der Verrastung der Wanddurchführung (100) in dem Durchgangsloch (118) der Wand (106) unter mechanischer Spannung steht und umlaufend dichtend an der Wand (106) anliegt.

9. Wanddurchführung (100) nach einem der Ansprüche 1 bis 7, wobei das Dichtungsteil (104) die Hartkomponente (102) glockenförmig umschließt, wobei die Durchführungsöffnung (110) frei bleibt.

10. Wanddurchführung (100) nach einem der vorhergehenden Ansprüche, wobei die Teile der Hartkomponente (102) Gleichteile sind.

## Claims

1. A wall feed-through (100), configured for the displaceable guidance of a line, a cable or a rod, having a multi-part hard component (102) and a one-part, radially circumferentially sealing sealing part (104), wherein each part of the hard component (102) has a continuous recess (108), which extends in the state built into a wall (106) in a direction pointing out from a plane lying parallel to the wall (106), wherein the recesses (108) of the parts of the hard component (102) in the assembled state form a feed-through opening (110), wherein each part of the hard component (102) has a first receptacle (112) in the recess (108), in which a soft component (114) separate from the sealing part (104) is arranged, wherein the respective soft components (114) abut against one another in a sealing manner in the mounted state of the parts of the hard component (102) and radially surround the feed-through opening (110), wherein the parts of the hard component (102) have one or a plurality of latching devices (116), which latch with the wall (106) after the introduction of the wall feed-through (100) into a through-hole (118) of the wall (106), wherein each part of the hard component (102) has at least a second receptacle (120) for the sealing part (104) on an outer side, and wherein the sealing part (104) has a sealing region (122), which seals the parts of the hard component (102), which are assembled and latched with the wall at least between the second receptacle (120) and the wall (106).

2. The wall feed-through (100) according to claim 1, wherein the parts of the hard component (102) at or on a first surface, which in the mounted state at least in regions abuts against a corresponding second surface of an adjacent part of the hard component (102), have sealing means, wherein the sealing means, sealing adjacent to the soft components (114), extend in the radial direction from the inner feed-through opening without interruption to an outer surface of the hard component.

3. The wall feed-through (100) according to claim 1 or 2, wherein the feed-through opening (110) has a smaller diameter in the region of the soft components (114) than in the region of the hard component (102).

4. The wall feed-through (100) according to any one of claims 1 to 3, wherein the parts of the hard component (102) have one or a plurality of connecting elements (124), by means of which the parts of the hard component (102) can be connected.

5. The wall feed-through (100) according to any one of claims 1 to 4, wherein the sealing part (104) annularly surrounds the parts of the hard component (102) at least between the second receptacle (120) and the wall (106).

6. The wall feed-through (100) according to any one of claims 1 to 5, wherein the sealing part (104) is elastically deformable in the state built into a wall at least in a direction, which points out from the plane parallel to the wall (106).

7. The wall feed-through (100) according to any one of claims 1 to 6, wherein the sealing part (104) can be connected to the second receptacle (120) in a material- and/or positive-locking manner, so that the hard component (102) and the sealing part (104) can be fixed to one another.

8. The wall feed-through (100) according to any one of claims 1 to 7, wherein the sealing part (104) has a radially circumferential elastic sealing lip (132) projecting in the direction of wall (106) in the state build into a wall on a side abutting against the wall (106), which sealing lip is under mechanical tension after the latching of the wall feed-through (100) in the through-hole (118) of the wall (106) and abuts against the wall (106) in a circumferentially sealing manner.

9. The wall feed-through (100) according to any one of claims 1 to 7, wherein the sealing part (104) surrounds the hard component (102) in a bell-shaped manner, wherein the feed-through opening (110) remains free.

10. The wall feed-through (100) according to any one of the preceding claims, wherein the parts of the hard component (102) are identical parts.

## Revendications

1. Traversée de paroi (100), conçue pour le guidage coulissant d'une conduite, d'un câble ou d'une tringlerie, avec une composante dure en plusieurs parties (102) et une partie d'étanchéité radiale circulaire d'une seule pièce (104), dans laquelle chaque partie de la composante dure (102) comprend un évidement traversant (108), qui, dans un état inséré dans une paroi (106), s'étend dans une direction sortant d'un plan parallèle à la paroi (106), dans laquelle les évidements (108) des parties de la composante dure (102) forment, dans l'état assemblé, une ouverture de traversée (110), dans laquelle chaque partie de la composante dure (102) comprend, dans l'évidement (108), un premier logement (112), dans lequel est disposée une composante souple (114) distincte de la partie d'étanchéité (104), dans laquelle les composantes souples (114) respectives sont juxtaposées de manière étanche dans l'état monté des parties de la composante dure (102) et entourent radialement l'ouverture de traversée (110), dans laquelle les parties de la composante dure (102) comprennent un ou plusieurs dispositifs d'encliquetage (116) qui, après l'insertion de la traversée de paroi (100) dans un trou de passage (118) de la paroi (106), s'encliquettent avec la paroi (106), dans laquelle chaque partie de la composante dure (102) comprend, sur un côté extérieur, au moins un deuxième logement (120) pour la partie d'étanchéité (104) et dans laquelle la partie d'étanchéité (104) comprend une zone étanche (122) qui étanchéifie les parties, assemblées et encliquetées avec la paroi, de la composante dur (102) au moins entre les deuxièmes logements (120) et la paroi (106).

2. Traversée de paroi (100) selon la revendication 1, dans laquelle les parties de la composante dure (102) comprennent, au niveau ou sur une première surface, qui s'appuie, dans l'état monté, au moins à certains endroits, contre une deuxième surface correspondante d'une partie adjacente de la composante dure (102), des moyens d'étanchéité, dans laquelle les moyens d'étanchéité s'étendent sur les composantes souples (114) de manière étanche dans la direction radiale à partir de l'ouverture de traversée sans interruption jusqu'à une surface externe de la composante dure.

3. Traversée de paroi (100) selon la revendication 1 ou 2, dans laquelle l'ouverture de traversée (110) présente, au niveau des composantes souples (114), un diamètre plus petit qu'au niveau de la composante dure (102).

4. Traversée de paroi (100) selon l'une des revendications 1 à 3, dans laquelle les parties de la composante dure (102) comprennent un ou plusieurs éléments de liaison (124) au moyen desquels les parties de la composante dure (102) peuvent être reliés.

5. Traversée de paroi (100) selon l'une des revendications 1 à 4, dans laquelle la partie d'étanchéité (104) entoure de manière annulaire les parties de la composante dure (102) au moins entre les deuxièmes logements (120) et la paroi (106).

6. Traversée de paroi (100) selon l'une des revendications 1 à 5, dans laquelle la partie d'étanchéité (104) est déformable élastiquement, dans un état inséré dans une paroi, au moins dans une direction qui ressort du plan parallèle à la paroi (106).

7. Traversée de paroi (100) selon l'une des revendications 1 à 6, dans laquelle la partie d'étanchéité (104) peut être reliée avec les deuxièmes logements (120) par liaison de matière et/ou par complémentarité de forme, de façon à ce que la composante dure (102) et la partie d'étanchéité (104) puissent être fixées l'une à l'autre.

8. Traversée de paroi (100) selon l'une des revendications 1 à 7, dans laquelle la partie d'étanchéité (104) comprend, dans un état inséré dans une paroi, sur un côté s'appuyant contre la paroi (106), une lèvre d'étanchéité élastique (132) en saillie en direction de la paroi (106), qui, après l'encliquetage de la traversée de paroi (100) dans le trou de passage (118) de la paroi (106), subit une contrainte mécanique et s'appuie sur son pourtour de manière étanche contre la paroi (106).

9. Traversée de paroi (100) selon l'une des revendications 1 à 7, dans laquelle la partie d'étanchéité (104) entoure la composante dure (102) à la manière d'une cloche, dans laquelle l'ouverture de traversée (110) reste libre.

10. Traversée de paroi (100) selon l'une des revendications précédentes, dans laquelle les parties de la composante dure (102) sont des pièces identiques.
